# EUROPÄISCHE PATENTSCHRIFT

(11) **EP 0 931 277 B1**
(45) Veröffentlichungstag und Bekanntmachung des Hinweises auf die Patenterteilung: **07.11.2001**
(21) Anmeldenummer: 97909201.2
(22) Anmeldetag: 30.09.1997
(51) Int. Cl.: G02B 27/22, H04N 13/00, G02B 27/26

(54) **SYSTEM ZUR PROJEKTION VON INSBESONDERE 3D-BILDDARSTELLUNGEN AUF EINER BILDANZEIGEEINRICHTUNG**
PROJECTION SYSTEM, IN PARTICULAR FOR THREE-DIMENSIONAL REPRESENTATIONS ON A VIEWING DEVICE
SYSTEME DE PROJECTION, NOTAMMENT DE REPRESENTATIONS 3D SUR UN DISPOSITIF DE VISIONNAGE

(30) Priorität: 09.10.1996 DE 19641480
(43) Veröffentlichungstag der Anmeldung: 28.07.1999
(73) Patentinhaber: Tan, Helmut, 40239 Düsseldorf (DE)
(72) Erfinder: TAN, Helmut, D-40472 Düsseldorf (DE); HEGER, Attila, D-40237 Düsseldorf (DE)
(74) Vertreter: Meyer, Ludgerus A., Dipl.-Ing.
(86) Internationale Anmeldenummer: DE9702246
(87) Internationale Veröffentlichungsnummer: WO9815869

(56) Entgegenhaltungen:
- EP-A- 0 656 555
- WO-A-90/03086
- WO-A-94/04956
- DE-A- 4 309 667
- US-A- 4 879 603
- PATENT ABSTRACTS OF JAPAN vol. 015, no. 269 (E-1087), 9.Juli 1991 -& JP 03 089794 A (NIPPON TELEGR & TELEPH CORP), 15.April 1991,

## Beschreibung

Die Erfindung betrifft ein System zur Projektion von nicht-holographischen 3D-Bilddarstellungen auf einer Bildanzeigeeinrichtung nach dem Oberbegriff des Anspruchs 1.

Die Darstellung von 3D-Objekten auf einer Bildanzeigeeinrichtung erfolgt häufig in einer 2D-Darstellung, bei der der Betrachtungswinkel und -ort des Betrachters in Bezug auf den feststehenden Bildschirm die jeweilige Bildansicht bestimmt. Dabei muß der Ort des Betrachters bezüglich des Bildschirms in räumlichen Koordinaten durch geeignete Sensoren festgestellt werden, und die Bildschirmdarstellung muß durch eine geeignete Steuereinrichtung (Tracking-System) entsprechend berechnet und eingestellt werden. Mit einem derartigen Verfahren kann für einen Bildschirm nur jeweils ein Betrachter die seinem Betrachtungsort entsprechende Darstellung des Objekts auf dem Bildschirm wahrnehmen, andere Betrachter erhalten ein verzerrtes Bild.

Bei einem anderen Verfahren zur Betrachtung eines virtuell im Raum feststehenden Objekts ist einem Betrachter jeweils ein Bildschirm fest zugeordnet, wobei der jeweilige Ort des Betrachters und des Bildschirms durch ein Tracking-System erfaßt wird und die Darstellung abhängig vom Standort und Blickwinkel des Betrachters in Echtzeit jeweils neu berechnet und angezeigt wird. Solche Systeme verwenden in der Regel einen Helm mit den Augen des Betrachters unmittelbar zugeordneten Anzeigeeinrichtungen, z. B. einem LCD-Schirm. Derartige Helme sind jedoch unhandlich und ebenfalls nur auf einen Betrachter bezogen. Ferner kann die natürliche Umgebung des Betrachters nicht ohne weiteres in die Helmdarstellung einbezogen werden. Das Tracking-System kann bei diesem Verfahren aber auch den Standort und die Darstellungsrichtung des Bildschirms auswerten, so daß kein Helm erforderlich ist. Es bleibt jedoch bei einer einzigen Darstellung auf dem Bildschirm.

Eine echte stereoskopische Projektion ermöglicht weitergehende Ansichten von räumlichen Verhältnissen, beispielsweise können Formen und Formteile oder Werkstücke detailliert mit Lichtem und Schatten dargestellt werden. Bei einer Echtzeit-Darstellung, die aus einem Rechner abgeleitet wird, kann das Objekt unmittelbar visuell geändert werden.

Bei der echten stereoskopischen Bilddarstellung durch Projektion auf eine Leinwand oder Anzeige auf einem Bildschirm werden im wesentlichen zwei Verfahren verwendet, bei denen als Bildseparatoren Brillen benutzt werden, die es möglich machen, dem rechten und linken Auge unterschiedliche Bildinformationen zugänglich zu machen.

Beim passiven Verfahren sind die Brillengläser der Brille unterschiedlich polarisiert, beispielsweise im Winkel von 90° zueinander oder gegenläufig zirkular. Entsprechend dazu passend muß die Bilddarstellung auf der Leinwand polarisiert sein. Dies erfolgt beispielsweise dadurch, daß Projektoren verwendet werden, die für die rechte bzw. linke Bilddarstellung unterschiedlich gerichtete Polarisationsvorsätze aufweisen.

Bei der Aktivtechnik sind keine Polarisationsfilter erforderlich, sondern hier erfolgt die Bildseparation durch sequentielle Darstellung der dem linken und rechten Auge zugeordneten Bildinformationen. Mittels einer Synchronsteuereinrichtung wird im gleichen Rhythmus eine Flüssigkristallbrille (Shutter-Brille) umgeschaltet, so daß der Betrachter auf jedem Auge nur die diesem Auge zugeordnete Bildinformation aufnehmen kann. Die Taktfrequenz der Umschaltung der Shutter-Brillen bestimmt dabei, inwieweit ein Flimmereffekt wahrgenommen wird.

Sowohl für die aktive als auch für die passive Technik gilt, daß ein oder mehrere Personen zur selben Zeit nur die selbe 3D-Bilddarstellung erfassen können. Wenn es z. B. gewünscht ist, Arbeitsabläufe und Handhabungen stereoskopisch darzustellen, um dem Betrachter eine stereoskopische Anzeige eines bestimmten Zustandsraums zu vermitteln, der der eigenen Person zugeordnet ist, und es gewünscht ist, einer zweiten Person gleichzeitig den dieser Person zugeordneten Zustandsraum zu vermitteln, die sich bildlich unterscheiden, ist es unerwünscht, beiden Betrachtern die selbe 3D-Bilddarstellung anzuzeigen.

Eine der natürlichen Ansicht eines Objektes entsprechende Darstellung, bei der mehrere Betrachter unterschiedliche Ansichten erfassen, ist mit heutigen Mitteln nur über eine holographische Darstellung zu realisieren. Ein Echtzeit-Hologramm größerer Objekte, z. B. eines Autos, mit Änderungsmöglichkeit der Darstellung ist jedoch bisher nicht realisierbar und erscheint auf absehbarer Zeit auch nicht denkbar.

Aus der US-A 4,879,603 ist ein System zur Darstellung zweier unterschiedlicher Bilder in Form von zwei 2D-Darstellungen auf einer einzigen Anzeigeeinheit bekannt, wobei die Anzeigen für getrennte Betrachter durch als Zirkularpolarisatoren ausgebildete Bildtrennmittel voneinander getrennt werden. Es handelt sich dabei um keine stereoskopische Darstellung.

Die EP-A-0 656 555 gibt ein Projektionssystem für 3D-Bilddarstellungen an, bei dem ein Betrachter eine 3D-Bilddarstellung betrachten kann. Dazu werden zwei Bildschirme verwendet, die durch ein Spiegelsystem eine Rechts/Links-Trennung bewirken, wobei eine Separation der beiden 3D-Bilddarstellungen bezüglich der Position des Betrachters vorgenommen wird, indem außerordentlich komplizierte Beleuchtungseinrichtungen bzw. Linsenrasteranordnungen verwendet werden. Jedes Stereobild wird dabei nur jeweils einer einzigen (nur wenig änderbaren) Position zugeordnet, die nur jeweils von einem Betrachter eingenommen werden kann.

Der Erfindung liegt die Aufgabe zugrunde, ein System zur Projektion von nicht-holographischen 3D-Bilddarstellungen, und insbesondere stereoskopischer Darstellungen, auf einer Bildanzeigeeinrichtung anzugeben, mit dessen Hilfe eine einer holographischen Darstellung angenäherte gleichzeitige Darstellung unterschiedlicher Bildinhalte für mehrere Betrachter möglich ist.

Diese Aufgabe wird durch die im Anspruch 1 angegebene Erfindung gelöst. Vorteilhafte Weiterbildungen der Erfindung sind in Unteransprüchen angegeben.

Gemäß der Erfindung ist ein System zur Projektion von nicht-holographischen 3D-Bilddarstellungen auf einer Bildanzeigeeinrichtung angegeben, bei dem die den Augen des Betrachters zugeordneten Bilddarstellungen in Beziehung gesetzt werden zum jeweiligen Standort des Betrachters, indem dem Betrachter zugeordnete Sensoren den jeweiligen Standort des Betrachters ermitteln und auf der Anzeigeeinrichtung ein virtuell räumlich angeordnetes Objekt entsprechend dem Betrachtungstandort des Betrachters angezeigt wird. Zum gleichzeitigen Wahrnehmen verschiedener 3D-Bilddarstellungen auf der selben Bildanzeigeeinrichtung durch mehrere Betrachter erfolgt eine gleichzeitige Anzeige mehrerer 3D-Bilddarstellungen, die den jeweilgen Betrachtungsstandorten der Betrachter zugeordnet sind. Den jeweiligen Betrachtern sind Bildtrennmittel zugeordnet, durch die ihnen jeweils nur die ihnen gemäß ihrem Standort zugeordneten Bilddarstellungen zugänglich werden, wobei zur stereoskopischen Betrachtung des Objekts den Betrachtern jeweils zwei den rechten und linken Augen zugeordnete, durch Bildseparatoren getrennte 3D-Bilddarstellungen dargeboten werden.

Mit Hilfe des erfindungsgemäßen Systems ist es moglich, daß mehrere Betrachter gleichzeitig auf der Bildanzeigeeinrichtung ein Objekt aus unterschiedlichen Positionen betrachten konnen, wobei der Betrachtungswinkel für jede Person dem tatsächlichen Betrachtungswinkel des virtuell feststehenden Objektes entspricht. Daher ist es moglich, daß eine Person eine bestimmte Perspektive des Objektes betrachtet, während eine andere Person gleichzeitig ein anderes Detail des Objektes in Augenschein nimmt.

Die den Betrachtern zugeordneten Bilddarstellungen können zeitlich sequentiell angezeigt werden. Die Bildtrennmittel sind dann mit den Bilddarstellungen synchronisierte Shutter-Brillen, die jeweils nur dann das projizierte Licht passieren lassen, wenn die dem jeweiligen Betrachter zugeordnete Bilddarstellung angezeigt wird.

In einer alternativen Ausführungsform werden die den Betrachtern zugeordneten Bilddarstellungen gleichzeitig angezeigt, wobei diese auf dem Projektionsschirmen unterschiedlich polarisiert sind. Die Bildtrennmittel sind in diesem Fall Polarisationsbrillen, die jeweils nur die ihrer Polarisationsrichtung entsprechenden und dem Betrachtungsstandort des jeweiligen Betrachters zugeordneten Bilddarstellungen passieren lassen.

Zur stereoskopischen Projektion werden den rechten und linken Augen der Betrachter jeweils durch Bildseparatoren getrennte Bilddarstellungen zugeordnet dargeboten.

Wenn für die stereoskopische Projektion Shutter-Brillen, verwendet werden, wird die Zeitdauer, in der die jeweilige Shutter-Brille eines Betrachters innerhalb einer Periode der Taktfrequenz für jedes Auge lichtdurchlässig geschaltet ist, vorzugsweise im Verhältnis der Zahl der Betrachter verkürzt bzw. die Taktfrequenz der Bilddarstellung im Verhältnis der Zahl der Betrachter erhöht, damit sich der Flimmereffekt aufgrund der zeitlich nacheinanderfolgenden Darstellung nicht verstärkt.

Wird das System zur stereoskopischen 3D-Bilddarstellung insbesondere für zwei Betrachter verwendet, sind diese damit in der Lage, gleichzeitig, aber für jede Person getrennt, die zugeordneten Bildinformationen zu erfassen. Damit lassen sich beispielsweise Arbeitsverfahren, die gemeinsam durchgeführt werden, erheblich besser visualisieren, als es bei der Darstellung lediglich einer einzigen stereoskopischen Projektion möglich ist.

Das erfindungsgemaße System läßt sich besonders vorteilhaft bei der Projektion bzw Darstellung von 3D-Bildinformationen auf einem von einem Computer gesteuerten Bildschirm bzw. bei eine durch Computer gesteuerte Projektionseinrichtung verwenden.

Es kann eine einzige Projektionseinrichtung verwendet werden, die die verschiedenen Bilddarstellungen sequentiell hintereinander projiziert. Alternativ kann ein System verwendet werden, bei dem jedem Betrachter eine eigene Projektionseinrichtung zugeordnet ist. Bei Verwendung des erfindungsgemäßen Systems bei zwei Betrachtern und Stereoprojektion können vier alternative Darstellungssequenzen verwendet werden. Die Wahl der jeweiligen Sequenz hängt davon ab. welche inhaltliche Darstellung gezeigt werden soll, da das Übersprechen zwischen den verschiedenen Kanälen zu berücksichtigen ist, welche Art von Shutter-Brillen verwendet wird und welche Projektionstechnologie angewandt wird.

In einer bevorzugten Ausführungsform der Erfindung sind die Separatoren zur Trennung der Rechts-/Linksinformation bei den einzelnen Betrachtern Polarisationsanordnungen und die Bildtrennmittel zur Trennung der betrachteten Bilder zwischen den unterschiedlichen Betrachtern Shutter-Anordnungen. Die Zuordnung kann auch umgekehrt verwendet werden.

Als Polarisationseinrichtungen können beispielsweise linear oder zirkular polarisierte Filter an entsprechend ausgerüsteten Projektoren verwendet werden. Zur Betrachtung erhalt ein erster Betrachter bzw. eine erste Gruppe von Betrachtern Shutter-Brillen mit einer ersten Polarisationsrichtung und ein zweiter Betrachter bzw eine zweite Gruppe von Betrachtern erhält Shutter-Brillen mit einer zweiten Polarisationsrichtung. Mögliche Lichtverluste durch die Polansationsfilter können ausgeglichen werden durch Verwendung mehrerer Projektoren für jeden oder jede Gruppe von Betrachtern.

Vorzugsweise ist die Projektionsflache ein zylindrischer Schirm in dem das zu betrachtende Objekt virtuell fest angeordnet ist. Sofern auch eine Oben-/Unteninformation gewunscht wird, kann in einer erweiterten Ausbildungsform der Erfindung auch eine kugelförmige Projektionsfläche verwendet werden, in der das Objekt virtuell verankert ist, wobei die Projektionsschirme jeweils von innen angestrahlt werden. Ein sich außerhalb der Projektionsanordnung befindlicher Betrachter erfährt daher die Illusion, daß das zu betrachtende Objekt sich in dem von der Projektionsfläche eingeschlossenen Raum befindet. Bei der stereoskopischen Projektion kann das Objekt daher als ein die Projektionsflache schneidendes Objekt gesehen werden, je nach Einstellung des stereoskopischen Scheinfensters.

Das erfindungsgemäße System erlaubt es, Objekte auch größerer Art nach Art einer holographischen Darstellung zu betrachten. Die dargestellten Objekte können photorealistische Darstellungen eines Objekts sein, sie können jedoch auch computergenerierte Graphiken sein, deren Gestalt sich interaktiv verändern läßt. Derartige Anwendungen sind insbesondere in der Konstruktion und dem Design von Maschinenteilen, Kraftfahrzeugteilen oder anderen Produkten einsetzbar. Bei einer zylinder- oder kugelformigen Projektionsfläche können die Betrachter sich um das Objekt herumbewegen. Alternativ kann zur Erzielung des gleichen Effekts auch das Objekt virtuell gedreht werden, während der Betrachter seine Stellung beibehält. In diesem Fall ist kein Tracking-System erforderlich.

Bei einer zylinderformigen oder kugelformigen Projektionsflache kann das dargestellte Produkt homogen und nahtlos angezeigt werden. Hierzu konnen auch an sich bekannte Bildverarbeitungsverfahren zur Kantenverbesserung eingesetzt werden, um z.B. das Erscheinen von Rändern an nebeneinanderliegenden Bildern zu vermeiden.

Die Erfindung wird nachstehend anhand eines Ausführungsbeispiels näher erläutert. Es zeigen:
- Fig. 1: eine allgemeine Ansicht einer Projektionseinrichtung unter Verwendung von Shutter-Brillen,
- Fig. 2a-d: Darstellungen unterschiedlicher Anzeigesequenzen für zwei Betrachter,
- Fig. 3: eine zylinderformige Projektionseinrichtung mit der Darstellung eines virtuellen Objekts, und
- Fig. 4: eine kugelförmige Projektionseinrichtung mit einem im Inneren dargestellten virtuellen Objekt.

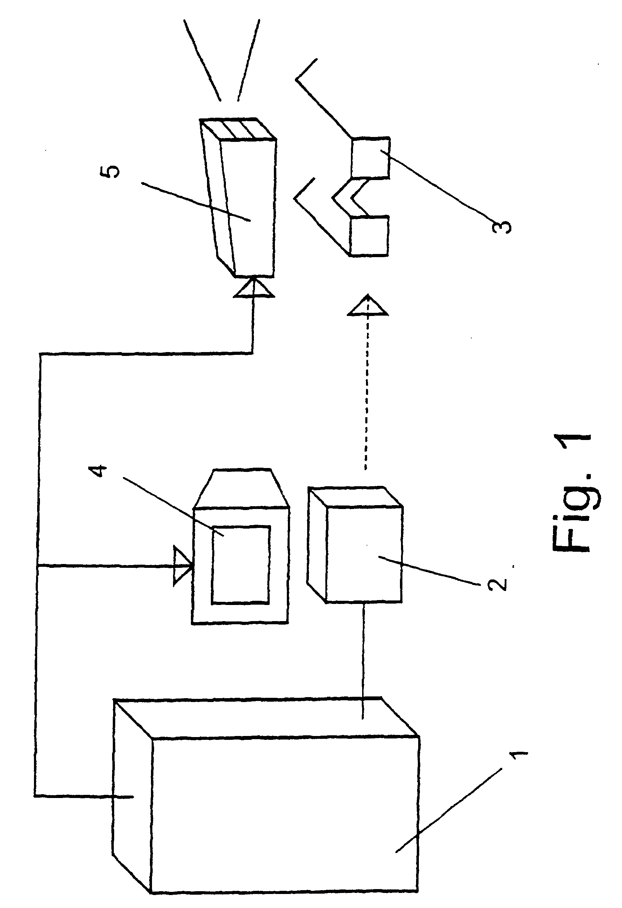

In Fig. 1 ist ein Rechner 1 dargestellt, der einen Projektor 5 und/oder einen Monitor 4 ansteuert und an diese Bildsignale übermittelt. Der Rechner gibt ferner ein Steuersignal an einen Infrarotsender 2 ab. der Infrarotsignale an den Empfanger übermittelt, der in der Shutter-Brille 3 angeordnet ist. Der Rechner 1 wird so gesteuert, daß auf dem Monitor 4 oder der Projektionseinrichtung 5 sequentiell hintereinander Bilddarstellungen angezeigt werden, die mit der Shutter-Brille 3, die im entsprechenden Rhythmus durch die Infrarotsteuerung umgeschaltet wird, betrachtet werden konnen, so daß sich für den Betrachter ein stereoskopisches Bild einstellt.

Das Grundprinzip der Steuerung der Anzeigevorrichtungen über Projektoren 5 oder Monitore 4 und Ansteuerung von Shutter-Brillen 3 unterscheidet sich nicht bei einem oder bei mehreren Betrachtern. Bei der Darstellung einer einzigen Bildinformation für mehrere Betrachter wird einfach eine entsprechend erhöhte Zahl von Shutter-Brillen verwendet. Bei der Verwendung der Einrichtung nach Fig. 1 für die gleichzeitige. Darstellung unterschiedlicher stereoskopischer Darstellungen fur mehrere Betrachter ist der Rechner 1 so zu steuern, daß die sequentielle Folge der unterschiedlichen Bilddarstellungen den jeweiligen Betrachtern in der richtigen Zuordnung übermittelt wird

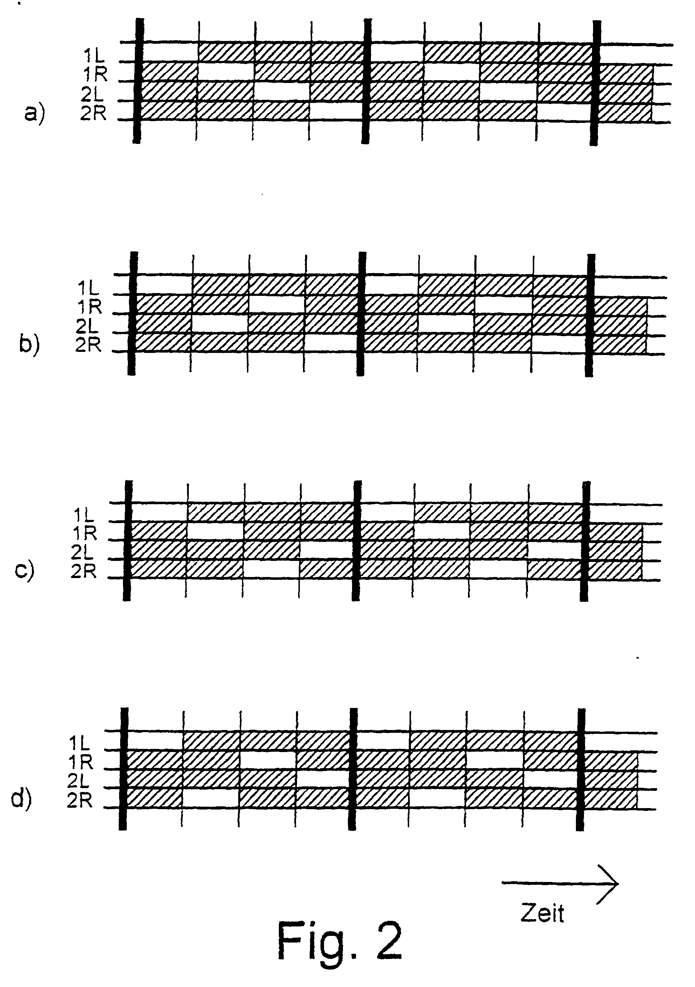

Fig 2 zeigt vier alternative Möglichkeiten der sequentiellen stereoskopischen Darstellung verschiedener Bilddarstellungen für zwei Betrachter. Die Angaben in der linken Spalte bedeuten 1L = linkes Auge Betrachter 1, 1R = rechtes Auge Betrachter 1, 2L = linkes Auge Betrachter 2, 2R = rechtes Auge Betrachter 2.

Fig 2a zeigt die Darstellungsreihenfolge 1L, 1R, 2L, 2R, welche sich in jeder Periode der Taktfrequenz wiederholt. Fig. 2b zeigt die Reihenfolge 1L, 2L, 1R, 2R. Fig. 2c zeigt die Reihenfolge 1L, 1R, 2R, 2L, während Fig. 2d die Reihenfolge 1L, 2R, 1R, 2L zeigt. Die Sequenzen der Darstellungen der Figuren 2b und d weisen den Vorteil auf, daß einerseits die subjektive Flimmerwahrnehmung für den Betrachter verringert ist, da die Zeitabfolge der Darstellungen gegenüber den Sequenzen der Figuren 2a und c gleichmäßiger ist und ferner, weil das Übersprechen zwischen linker und rechter Darstellung wegen des zeitlichen Abstandes erheblich verringert ist. Wenn sich die Bilddarstellungen für den ersten und zweiten Betrachter außerdem nur geringfügig unterscheiden, ist auch das Übersprechen zwischen den Darstellungen der Betrachter relativ gering.

Obgleich sich durch das erfindungsgemäße Verfahren bei stereoskopischer Darstellung der Flimmereffekt gegenüber einer einzigen Darstellung erhöht, kann dieser Effekt wieder verringert werden durch Erhöhung der Taktfrequenz der Darstellung, beispielsweise auf 160 - 180 Hz, wobei dem Wert nur Grenzen gesetzt sind durch die maximale Schaltfrequenz der Shutter-Brillen.

Zur Verdoppelung der Zahl der Betrachter und der gleichzeitigen Bilddarstellungen konnen die Shutter-Brillen und Projektionseinrichtungen zusätzlich alternativ mit Polarisationsfiltern versehen sein, die entweder unterschiedlich linear oder zirkular polarisiert sind. Die durch die Verwendung von Polarisationsfiltern auftretende Lichtschwächung kann durch Erhöhung der Lichtstärke der Projektoren, durch Verwendung mehrere Projektoren fur jeden Betrachter und/oder jeder Polarisationsrichtung oder sogar durch Verwendung einer Vielzahl von Projektoren fur jede einzelne Bilddarstellung eines einzigen Auges kompensiert werden.

Obgleich in diesem Ausfuhrungsbeispiel daher nur von zwei bzw. vier Betrachtern gesprochen ist, ist selbstverständlich die Zahl der Betrachter, die jeweils die gleiche Darstellung betrachten, nicht auf zwei bzw. vier beschrankt, sondern beliebig.

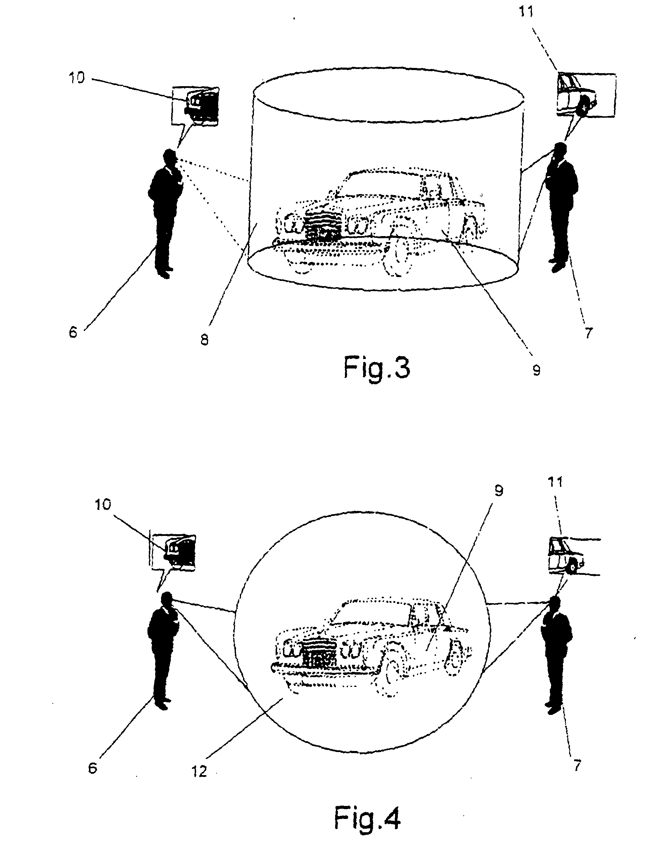

Fig 3 zeigt eine Projektronsanordnung, die einen zylinderformigen Bildschirm 8 enthält, der von der Innenseite mit einer geeigneten Rundumprojektionseinrichtung bestuckt ist. Zwei Betrachter 6 und 7 befinden sich außerhalb des Projektionsschirms. Der oder die Projektoren werfen ein virtuelles Bild von der Innenseite auf die Projektionsfläche. Die Figur zeigt das virtuelle Bild 9 eines Autos. Fur zwei Betrachter werden bei einer 2D-Anzeige zwei Bilddarstellungen benotigt, die durch geeignete Polarisationsfilter oder durch Shutter-Anordnungen voneinander getrennt werden konnen. Bei Verwendung einer Polarisationseinnchtung wird ein erster Projektor verwendet, um eine Bilddarstellung in einer ersten Polarisationsrichtung auf den Projektionsschirm zu werfen, während ein zweiter Projektor mit einer zweiten Polarisationseinrichtung versehen ist die vorzugsweise eine zur ersten Projektionsrichtung senkrechte Polarisationsrichtung liefert. Wenn die beiden Betrachter entsprechende Polarisationsbrillen tragen, konnen die von den Projektoren auf den zylinderförmigen Schirm geworfenen Bilder den jeweiligen Betrachtern getrennt zugänglich gemacht werden. Die beiden Betrachter 6 und 8 sehen daher nur jeweils das ihnen zugeordnete Bild. Beispielsweise sieht der Betrachter 8 die Einzelheit 10, wahrend der Betrachter 7 die Einzelheit 11 des virtuellen Bildes 9 sieht.

Während es damit ohne weitere Maßnahmen den Betrachtern nur moglich ist, zwei unterschiedliche Bilder wahrzunehmen, können die Bilder mit einem an sich bekannten Tracking-System rechnerisch so berechnet und nachgeführt werden, daß bei einer Bewegung der Betrachter 6 und 7 um die zylinderförmige Projektionswand herum die Bilder jeweils neu berechnet werden, so daß das Objekt 9 virtuell als feststehend angesehen wird, während der Betrachter sich um den Projektionsschirm herum bewegt. Damit erfährt er die Illusion, als ob er in der Lage sei, das Objekt von allen Seiten zu betrachten. Wenn eine ausreichend schnellen Rechneranlage verwendet wird, um abhängig von dem jeweiligen Standort des Betrachters neu berechnete Bilder nachzuliefern, erscheint dem Betrachter das virtuelle Objekt wie ein reales Objekt, das von verschiedenen Seiten betrachtet werden kann.

Fig. 4 zeigt eine kugelförmige Projektionsanordnung 12, bei der das virtuelle Bild 9 ebenfalls im Inneren der Projektionsflache betrachtet werden kann. Hierbei ist zusätzlich zur Darstellung von Fig 3 auch noch eine Ansicht von oben und unten moglich, so daß das virtuelle Objekt in seiner gesamten Ansicht erfaßt werden kann.

Die Illusion eines gemäß die Figuren 3 und 4 dargestellten virtuellen Objekts wird erfindungsgemäß wesentlich gesteigert, wenn die virtuelle Darstellung als stereoskopische Darstellung angezeigt wird. Die Betrachter haben dazu Bildseparatoren zu tragen, um den beiden Augen des Betrachters jeweils das zugeordnete stereoskopische Bild zuordnen zu konnen. Die Bildseparatoren sind entweder Shutter-Anordnungen oder Polarisationseinrichtungen. Damit erscheint die Bilddarstellung den Betrachtern nicht nur auf einer ebenen Fläche angezeigt, sondern erscheint virtuell im Raum, wobei die stereoskopische Perspektive durch entsprechende Einstellung der Einzelbilder so festgelegt werden kann, daß die zu betrachtenden Objekte den Betrachtern von der Ebene der Projektionsfläche losgelöst erscheinen. Es ergibt sich dadurch eine einer holographischen Darstellung angenäherte visuelle Erfahrung.

Mit Hilfe des erfindungsgemäßen Verfahrens ist es damit möglich, völlig unterschiedliche 3D-Bilddarstellungen auf einer Leinwand oder einem Bildschirm für zwei oder mehr Betrachter bereitzustellen. Dies ist insbesondere bei visuellen Darstellungen von Arbeitsabläufen in Schulungseinrichtungen von großem Vorteil.

## Patentansprüche

1. System zur Projektion von nicht-holographischen 3D-Bilddarstellungen auf eine flachige Bildanzeigeeinnchtung (4, 8, 12) bei dem die den Augen des Betrachters zugeordneten Bilddarstellungen (9) in Beziehung gesetzt werden zum jeweiligen Standort des Betrachters (6, 7), indem dem Betrachter zugeordnete Sensoren den jeweiligen Standort des Betrachters ermitteln und auf der Anzeigeeinrichtung ein virtuell räumlich angeordnetes Obiekt (9) entsprechend dem Betrachtungsstandort des Betrachters angezeigt wird, **dadurch gekennzeichnet, daß** zur gleichzeitigen Wahrnehmung verschiedener 3D-Bilddarstellungen auf der selben Bildanzeigeeinrichtung durch mehrere Betrachter (6, 7) eine gleichzeitige Anzeige mehrerer 3D-Bilddarstellungen erfolgt, die den jeweiligen Betrachtungsstandorten der Betrachter zugeordnet sind, und daß den jeweiligen Betrachtern als Shutter- oder Polarisationsbrillen ausgeführte Bildtrennmittel zugeordnet sind, durch die den Betrachtern jeweils nur die ihnen gemäß ihrem Standort zugeordneten Bilddarstellungen zugänglich werden, wobei zur stereoskopischen Betrachtung des Objekts den Betrachtern jeweils zwei ihren rechten und linken Augen zugeordnete durch Bildseparatoren getrennte 3D-Bilddarstellungen dargeboten werden.

2. System nach Anspruch 1, **dadurch gekennzeichnet, daß** die den jeweiligen Betrachtern zugeordneten 3D-Bilddarstellungen zeitlich sequentiell angezeigt werden, wobei die Bildtrennmittel mit den Bilddarstellungen synchronisierte Shutter-Brillen sind.

3. System nach Anspruch 1, **dadurch gekennzeichnet, daß** die den jeweiligen Betrachtern zugeordneten 3D-Bilddarstellungen gleichzeitig erfolgen, wobei die Seperatoren Shutteranordnungen und die Bildtrennmittel Polarisationsbrillen (3) sind, die jeweils nur die ihrer Polarisationsrichtung entsprechenden und dem Betrachtungsstandort des jeweiligen Betrachters zugeordneten 3D-Bilddarstellungen passieren lassen.

4. System nach Anspruch 2, **dadurch gekennzeichnet. daß** die Zeitdauer, in der die jeweilige Shutter-Brille eines Betrachters innerhalb einer Periode der Taktfrequenz für jedes Auge lichtdurchlässig geschaltet ist, im Verhaltnis der Zahl der Betrachter verkürzt ist.

5. System nach Anspruch 4, **dadurch gekennzeichnet, daß** die Taktfrequenz der Bilddarstellung bei mehreren Betrachtern im Verhältnis der Zahl der Betrachter erhoht ist.

6. System nach Anspruch 4 oder 5, **dadurch gekennzeichnet, daß** bei einer Darstellung fur zwei Betrachter die Bilddarstellung in einer der folgenden Reihenfolgen erfolgt.
a) linkes Auge Betrachter 1
rechtes Auge Betrachter 1
linkes Auge Betrachter 2
rechtes Auge Betrachter 2
b) linkes Auge Betrachter 1
linkes Auge Betrachter 2
rechtes Auge Betrachter 1
rechtes Auge Betrachter 2
c) linkes Auge Betrachter 1
rechtes Auge Betrachter 1
rechtes Auge Betrachter 2
linkes Auge Betrachter 2
d) linkes Auge Betrachter 1
rechtes Auge Betrachter 2
rechtes Auge Betrachter 1
linkes Auge Betrachter 2

7. System nach Anspruch 1, **dadurch gekennzeichnet. daß** die Separatoren Polarisationsanordnungen und die Bildtrennmittel Shutteranordnungen sind.

8. System nach Anspruch 1 und 2, **dadurch gekennzeichnet, daß** die Bildanzeigeeinrichtung eine Kathodenstrahlrohre (4) oder ein LCD-Display ist.

9. System nach Anspruch 1, **dadurch gekennzeichnet, daß** die Bildanzeigeeinrichtung ein Projektionsschirm ist.

10. System nach Anspruch 9, **dadurch gekennzeichnet, daß** die Bildanzeigeeinrichtung ein zylindrisch geformter Projektionsschirm (8) ist, auf dessen Oberfläche von der Innenseite des Schirms her projiziert wird.

11. System nach Anspruch 9, **dadurch gekennzeichnet, daß** die Bildanzeigeeinrightung ein kugelformig geformter Projektionsschirm (12) ist, auf dessen Oberflache von der Innenseite des Schirms her projiziert wird.

12. System nach einem der Anspruche 8 - 11, **dadurch gekennzeichnet, daß** die verschiedenen Bilddarstellungen von einer einzigen sequentiell geschalteten Projektionseinrichtung angezeigt werden.

13. System nach einem der Ansprüche 9, 10 oder 11, **dadurch gekennzeichnet, daß** jeder Polarisationsrichtung der Polarisationsbrillen eine Projektionseinrichtung zugeordnet ist.

## Claims

1. A system for projecting non-holographic 3D images onto a plane viewing device (4, 8, 12) in which the images (9) assigned to the eyes of the viewer are put into relation to the viewer position (6, 7), wherein sensor means assigned to each viewer ascertain the assigned viewer position and a viewing device shows a virtual spatial object (9) according to the viewing point of the viewer, **characterized in that** a plurality of different 3D images assigned to the different viewing points of the viewers (6, 7) are displayed simultaneously onto said viewing device for the purpose of simultaneous perception of different 3D images by each viewer, that image-separating means in the form of shutter or polarization spectacles are. assigned to each viewer, through which the respective viewer will only perceive those images in accordance with his/her position, wherein said 3D images presented to the viewers include two left and two right eye images separated by image separators for stereoscopic viewing of the object.

2. A system in accordance with claim 1, **characterized in that** said plurality of 3D images assigned to each viewer are displayed sequentially and said image-separating means comprise shutter-lens spectacles synchronized with said plurality of 3D images.

3. A system in accordance with claim 1, **characterized in that** said 3D images assigned to each viewer are displayed simultaneously, wherein said image-separators consist of shutter-lens configurations and said image-separating means comprise polarization spectacles (3) which permit passage of the 3D images corresponding to polarization orientation and viewpoint of a particular viewer.

4. A system in accordance with claim 2, **characterized in that** the length of time in which the shutter-lens spectacles of a viewer are switched transparent within a period of the clock pulse frequency is shortened in proportion to the number of viewers.

5. A system in accordance with claim 4, **characterized in that** the clock pulse frequency of an image is increased in proportion to the number of viewers using the system.

6. A system in accordance with claim 4 or 5, **characterized in that** a pictorial representation of an object for two viewers takes place in one of the following sequences.
a) left eye viewer 1
right eye viewer 1
left eye viewer 2
right eye viewer 2
b) left eye viewer 1
left eye viewer 2
right eye viewer 1
right eye viewer 2
c) left eye viewer 1
right eye viewer 1
right eye viewer 2
left eye viewer 2
d) left eye viewer 1
right eye viewer 2
right eye viewer 1
left eye viewer 2

7. A system in accordance with claim 1, **characterized in that** said image separators consist of polarization configurations and said image-separating means consist of shutter-lens configurations.

8. A system in accordance with claim 1 and 2, **characterized in that** said viewing device is a cathode-ray tube (4) or an LC display.

9. A system in accordance with claim 1, **characterized in that** said viewing system is a projection screen.

10. A system in accordance with claim 9, **characterized in that** said viewing device is a cylindrical projection screen and images are projected onto a surface of said cylindrical projection screen from inside the projection screen (8).

11. A system in accordance with claim 9, **characterized in that** said viewing device is a spherical projection screen (12) and images are projected onto a surface of said spherical projection screen from inside the projection screen.

12. A system in accordance with claims 8 - 11, **characterized in that** different pictorial representations are displayed by a single projection device which projects the representations sequentially.

13. A system in accordance with claims 9, 10 or 11, **characterized in that** a projection device is assigned to each polarization orientation of said polarization spectacles.

## Revendications

1. Système pour la projection d'images 3D non holographiques sur un dispositif de visualisation plan (4, 8, 12), avec lequel les images (9) associées aux yeux de l'observateur (6, 7) sont mises en relation avec la position de celui-ci grâce au fait que des capteurs associés à l'observateur déterminent la position de celui-ci et qu'un objet (9) disposé virtuellement dans l'espace apparaît sur le dispositif de visualisation en fonction de la position de l'observateur, **caractérisé en ce que** pour permettre à plusieurs observateurs (6, 7) de voir en même temps différentes images 3D sur le même dispositif de visualisation, on visualise en même temps plusieurs images 3D qui sont associées aux différentes positions des observateurs, et **en ce qu'**on associe aux observateurs des moyens de séparation d'images, conçus comme des lunettes d'obturation ou de polarisation, grâce auxquels les observateurs n'ont accès qu'aux images qui leur sont associées, selon leur position, étant donné que pour une vision stéréoscopique de l'objet, on offre aux observateurs deux images 3D, séparées par des séparateurs d'images, qui sont associées respectivement à leur oeil droit et à leur oeil gauche.

2. Système selon la revendication 1, **caractérisé en ce que** les images 3D associées aux observateurs sont visualisées séquentiellement dans le temps, les moyens de séparation d'images étant des lunettes d'obturation synchronisées par rapport aux images.

3. Système selon la revendication 1, **caractérisé en ce que** les images 3D associées aux différents observateurs sont visualisées simultanément, les séparateurs étant des dispositifs d'obturation, et les moyens de séparation d'images étant des lunettes de polarisation (3) qui ne laissent passer que les images 3D correspondant à leur sens de polarisation et associées à la position de l'observateur.

4. Système selon la revendication 2, **caractérisé en ce que** la durée pendant laquelle les lunettes d'obturation d'un observateur sont commandées pour laisser passer la lumière pour chaque oeil à l'intérieur d'une période de la fréquence est réduite proportionnellement au nombre d'observateurs.

5. Système selon la revendication 4, **caractérisé en ce que** la fréquence de la représentation d'images en présence de plusieurs observateurs est augmentée proportionnellement au nombre d'observateurs.

6. Système selon la revendication 4 ou 5,
**caractérisé en ce que** dans le cas d'une représentation pour deux observateurs, la représentation d'image se fait dans l'un des ordres suivants :
a) oeil gauche observateur 1
oeil droit observateur 1
oeil gauche observateur 2
oeil droit observateur 2
b) oeil gauche observateur 1
oeil gauche observateur 2
oeil droit observateur 1
oeil droit observateur 2
c) oeil gauche observateur 1
oeil droit observateur 1
oeil droit observateur 2
oeil gauche observateur 2
d) oeil gauche observateur 1
oeil droit observateur 2
oeil droit observateur 1
oeil gauche observateur 2

7. Système selon la revendication 1, **caractérisé en ce que** les séparateurs sont des dispositifs de polarisation, et les moyens de séparation d'images des dispositifs d'obturation.

8. Système selon les revendications 1 et 2, **caractérisé en ce que** le dispositif de visualisation est un tube cathodique (4) ou un affichage à cristaux liquides.

9. Système selon la revendication 1, **caractérisé en ce que** le dispositif de visualisation est un écran de projection.

10. Système selon la revendication 9, **caractérisé en ce que** le dispositif de visualisation est un écran de projection cylindrique (8) sur la surface duquel la projection se fait de l'intérieur de l'écran.

11. Système selon la revendication 9, **caractérisé en ce que** le dispositif de visualisation est un écran de projection sphérique (12) sur la surface duquel la projection se fait de l'intérieur de l'écran.

12. Système selon l'une des revendications 8 à 11, **caractérisé en ce que** les différentes images sont visualisées par un seul dispositif de projection à montage séquentiel.

13. Système selon l'une des revendications 9, 10 ou 11, **caractérisé en ce qu'**un dispositif de projection est associé à chaque sens de polarisation des lunettes de polarisation.
